# EUROPEAN PATENT SPECIFICATION

(11) **EP 2 867 959 B1**
(45) Date of publication and mention of the grant of the patent: **28.02.2018**
(21) Application number: 13734159.0
(22) Date of filing: 06.06.2013
(51) Int. Cl.: H02B 11/24

(54) **WITHDRAWABLE CIRCUIT BREAKER WITH SHUTTER ARRANGEMENT**
EINZIEHBARER SCHUTZSCHALTER MIT BLENDENANORDNUNG
COUPE-CIRCUIT EXTRACTIBLE À DISPOSITIF DE VOLET

(30) Priority: 29.06.2012 IN 2598CH2012
(43) Date of publication of application: 06.05.2015
(73) Proprietor: ABB Schweiz AG, 5400 Baden (CH)
(72) Inventor: SANKAR, Babu, Nashik 422007 Maharastra (IN); DUKKAIAPPAN, Subbaiahthever, 422007 Nashik (IN); VADDIN, Harsha, Bellary Karnataka (IN)
(74) Representative: Zimmermann & Partner Patentanwälte mbB
(86) International application number: PCT/IB2013/001176
(87) International publication number: WO 2014/001863

(56) References cited:
- EP-A1- 2 405 545
- DE-A1-102007 055 047
- US-A- 4 285 026
- US-A- 4 565 908
- US-A- 5 486 978
- US-B1- 7 440 259

## Description

### FIELD OF THE INVENTION

The invention relates to a switchgear, and more particularly to the shutter arrangement of a switchgear.

### BACKGROUND

Generally, the switchgear has two disconnect contacts namely, the stationary disconnect contacts and the movable disconnect contacts. The stationary disconnect contacts has two groups of contacts of its kind, namely the first and second stationary disconnect contacts that respectively correspond to the two movable disconnect contacts namely the first and second movable disconnect contacts. The stationary disconnect contacts as the name suggests are stationary with regard to its position and is located within the switchgear. On the other hand, the movable disconnect contacts are the contacts associated with the circuit breaker that are movable into and outside the cubicle of the switchgear.

The stationary disconnect contacts which purports to the live contacts of the switchgear, and the movable disconnect contacts of the circuit breaker are either engaged or disengaged with each other depending on the movement of the circuit breaker. The stationary disconnect contacts and the movable disconnect contacts remains engaged when the circuit breaker is inside the cubicle of the switchgear. The stationary disconnect contacts and the movable disconnect contacts remains disengaged when the circuit breaker is moved out of the cubicle of the switchgear or simply when the circuit breaker is outside the cubicle of the switchgear.

At the disengaged position of the stationary disconnect contacts and the movable disconnect contacts, or during their disengagement, it is important to separate or indeed block these two contacts by providing a barrier between them. Such a barrier is provided by a shutter, operated by and through a shutter operating mechanism, so as to provide a barrier between the stationary disconnect contacts and the movable disconnect contacts. The shutter along with its operating mechanism primarily constitutes the shutter arrangement of switchgear.

The shutter is operable in a manner that it allows the engagement of the stationary disconnect contacts and the movable disconnect contacts when the circuit breaker is moved into or positioned inside the cubicle of the switchgear by enabling these two contacts to engage. Also, the shutter is operable in a manner that it disallows the engagement of the above said contacts when the circuit breaker is moved out or outside the cubicle of the switchgear by physically appearing between the said contacts or physically blocking the said contacts or of their engagement, thereby preventing accidental engagement of the stationary disconnect contacts and the movable disconnect contacts when they are intended to be disengaged.

Currently, two shutters are provided each pertaining to the corresponding groups of stationary and movable disconnect contacts. The two shutters are operable by the operating mechanism in vertical direction and in relation to the movement of the circuit breaker. The shutters move away from each other in vertical direction when the stationary and movable disconnect contacts engages with each other or when such engaging movement of the contacts takes place. Accordingly, the shutters move towards each other in vertical direction when the stationary and movable disconnect contacts disengages from each other or when such disengaging movement of the contacts takes place.
The movement of the shutters is synchronized in accordance with the movement of the circuit breaker in and out of the cubicle of the switchgear through appropriate operating levers and operating links so as to effect opening or closing of the shutters during engaging and disengaging of the contacts respectively.
The shutter arrangement as described herein above requires additional space above and below the shutter in closed position, in order to park or accommodate the shutters in open position. This adds to the space that is required to position or locate the shutter in the switchgear.
The shutter operating mechanism includes operating levers connecting the circuit breaker to the operating link of the shutter, and also operating links connecting the operating lever and the shutters. The constructional elements of this type of shutter operating mechanism not only adds to the complexity in constructing the shutter operating mechanism but also amounts to increased friction on account of such elemental parts of the shutter operating mechanism.
Document US 7,440,259 B1 is directed to a shutter arrangement for a withdrawable rack or module frame. A massive mask plate is equipped with cut portions which are configured to let the electrical contact blades of a withdrawable rack go through. A first shutter plate and a second shutter plate are movable in opposite lateral directions by means of an actuating element. Movement of the shutter plates is conducted by employing a mechanism comprising multiple rods and hinges which are connected to the actuating element. The linear rearward movement of the actuating element has to be translated into a mutually opposing lateral movement. The massive mask plate has an extension in the lateral direction at least as wide as the contact blades plus the space needed for the support rods.

Document US 5,486,978 A describes a switchgear according to the preamble of claim 1 with a cable interlock actuated by a plunger. A shutter which closes to prevent access to power system terminations at the rear of a draw-out circuit breaker enclosure when the breaker is removed, blocks operation of the cable interlock.
Owing to the above, there is a need for switchgear having shutter arrangement that requires less space, simple in construction and reduced friction in relation to the shutter operating mechanism and an improved dielectric performance. The invention is aimed at providing switchgear that caters to the need referred here above thereby providing switchgear having overall compactness, simplicity in construction and more reliability in operation, due to the improved dielectric performance.

### OBJECTS OF THE INVENTION

The object of the invention is to provide a switchgear that is compact.

Another object of the invention is to provide a switchgear having shutter arrangement that is simple in construction Yet another object of the invention is to provide a switchgear having shutter arrangement that experiences reduced friction or no friction.

Further object of the invention is to provide a switchgear having shutter arrangement that is more reliable in operation.

### SUMMARY OF THE INVENTION

Accordingly the invention provides a switchgear according to independent claim 1. The switchgear comprises:
at least one group of stationary contacts located within said switchgear;
at least one group of movable contacts located on a withdrawable circuit breaker of said switchgear; a shutter arrangement arranged to provide a physical barrier between said at least one group of stationary contacts and the corresponding at least one group of movable contacts,
wherein said shutter arrangement comprises
   - a bottom shutter (201b) having a first open portion;
   - a top shutter (201a) provided over the bottom shutter and having a second open portion, wherein the top shutter (201a) and the bottom shutter (201b) are movable relative to one another in a lateral direction along corresponding slots (202) between a closed position and an open position, with the top shutter (201a) movable over the bottom shutter (201b);
   - a shutter operating mechanism comprising an operating lever and an operating link connected thereto with the at least one of the top shutter (201a) and the bottom shutter (201b), the shutter operating mechanism adapted to operate the shutter arrangement upon movement of the withdrawable circuit breaker;
   - a shutter guide (204) adapted to guide movement of the shutters; and
   - one or more compression springs adapted to cooperate with the top shutter (201a) and/or the bottom shutter (201b) such that the shutters (201a, 201b) close in accordance with the corresponding movement of the at least one operating lever or the at least one operating link,
characterised by that said shutters have corners and / or edges that has a profile, wherein the said profile preferably includes one or more profiles such as flat, curl, hemmed or the like, wherein the said profile is provided to offer smooth finish to the said shutters and of its edge thereof and to increase the dielectric performance of the said switchgear.

Accordingly the invention also provides a method according to claim 15 for operating the shutter arrangement of a switchgear in accordance with the invention. The method of the invention comprises the steps of a) moving the circuit breaker in and out of a cubicle of the switchgear, b) operating the shutter operating mechanism of the shutter arrangement in accordance with corresponding movement of the said circuit breaker, c) operating at least one shutter of the switchgear to open or close by its corresponding and / or relative movement at an instance, by operating the shutter operating mechanism during the engagement or disengagement of at least one group of stationary disconnect contacts and corresponding at least one group of movable disconnect contacts of the switchgear, in accordance with the respective movement of the circuit breaker into or out of the cubicle of the switchgear thereof.

### BRIEF DESCRIPTION OF THE DRAWINGS:

With reference to the accompanying drawings in which:
Fig. 1a shows the shutter arrangement of a switchgear in accordance with the prior art, with the shutters in close condition;
Fig. 1b shows the shutter arrangement of a switchgear in accordance with the prior art, with the shutters in open condition;
Fig. 2a shows the shutter arrangement of a switchgear in accordance with one embodiment of the invention, with the shutters in close condition;
Fig. 2b shows the shutter arrangement of a switchgear in accordance with one embodiment of the invention, with the shutters in open condition;
Fig. 2c shows the shutter arrangement of a switchgear in accordance with one another embodiment of the invention, with the shutters in close condition; and
Fig. 2d shows the shutter arrangement of a switchgear in accordance with one another embodiment of the invention, with the shutters in open condition.

### DETAILED DESCRIPTION:

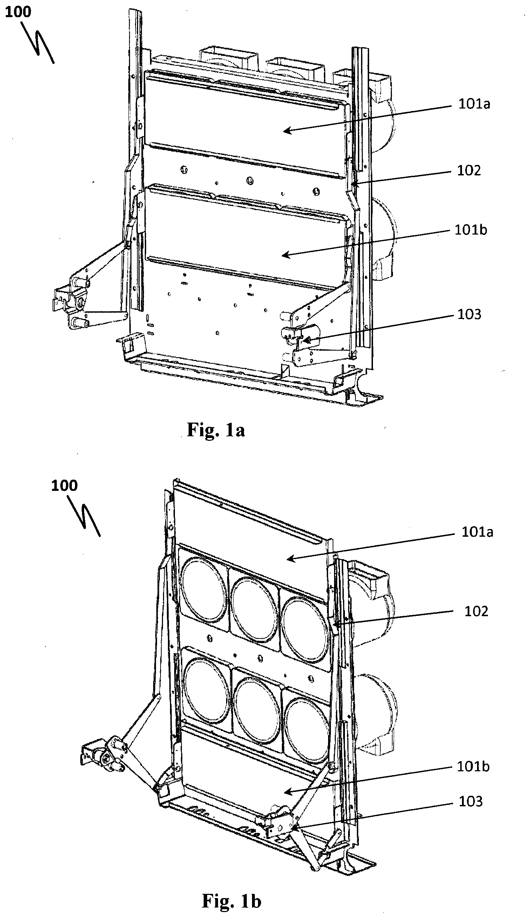

Figs. 1a and 1b shows the shutter arrangement (100) of a switchgear in accordance with the prior art, with the shutters in close and open condition respectively. The shutter arrangement (100) comprises of two shutters namely top shutter (101a) and bottom shutter (101b). The top shutter (101a) is disposed between the upper group of stationary disconnect contacts and its corresponding movable disconnect contacts. Similarly the bottom shutter (101b) is disposed between the lower group of disconnect contacts and its corresponding movable disconnect contacts.
The upper shutter (101a) and the lower shutter (101b) are connected to the circuit breaker of the switchgear through the shutter operating mechanism. The shutter operating mechanism essentially comprises operating links (102) connected at its one end to the top shutter (101a) and bottom shutter (101b) and at its other end to the operating lever (103), and operating lever (103) is further connected to the circuit breaker of the switch gear.

The circuit breaker is movable in and out of the cubicle of the switchgear. The movement of the circuit breaker into the cubicle of the switchgear causes the shutter operating mechanism through its operating lever and operating links to move the top shutter (101a) and the bottom shutter (101b) away from each other thereby opening the shutters and provides an opening (105) through which the stationary disconnect contacts and the movable disconnect contacts engages with each other. The top shutter (101a) moves in upward direction vertically and the bottom shutter (101b) moves in downward direction vertically, both almost along the same plane. This allows the movable disconnect contacts associated with the circuit breaker to engage with the stationary disconnect contacts. Here, the top shutter (101a) and bottom shutter (101b) have to be parked upon opening in the opened condition. Such parking of these two shutters occupies more space in addition to the space that is actually required for the equipment.

Similarly, the movement of the circuit breaker out of the cubicle of the switchgear causes the shutter operating mechanism through its operating lever and operating links to move the top shutter (101a) and the bottom shutter (101b) towards each other thereby closing the shutters. The top shutter (101a) moves in downward direction vertically and the bottom shutter (101b) moves in upward direction vertically, both almost along the same plane, from its parked position. This allows the movable disconnect contacts associated with the circuit breaker to disengage with the stationary disconnect contacts. And, the closing of the shutters physically separates the stationary disconnect contacts and the movable disconnect contacts by providing a physical barrier between these two group of contacts.

The switchgear of the prior art has shutter arrangement that requires more operable space amounting to increase in the size occupied by the switchgear. Also the shutter arrangement includes shutter operating mechanism that has operating levers and operating links, the numbers of which amounts to increase in friction between movable / operating parts and also to losses arising on account of friction or transmission.

Considering the description herein above, the switchgear of the prior art has complexity in its construction and occupies more space. Therefore, a switchgear a shutter arrangement that renders such switchgear compact and simple in its construction, and more reliable in its operation is required. The invention provides switchgear with one such shutter arrangement.

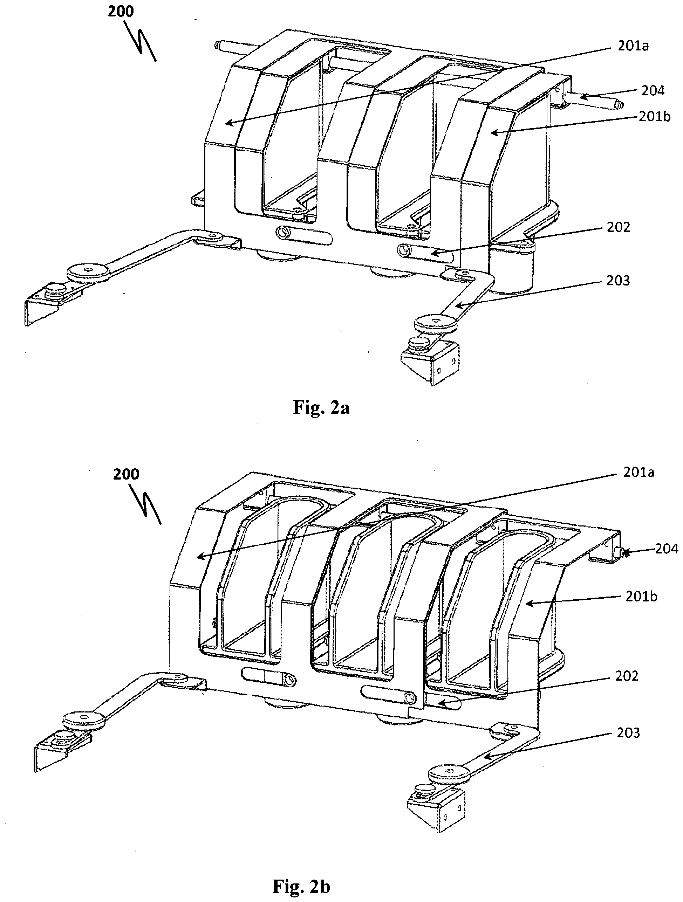

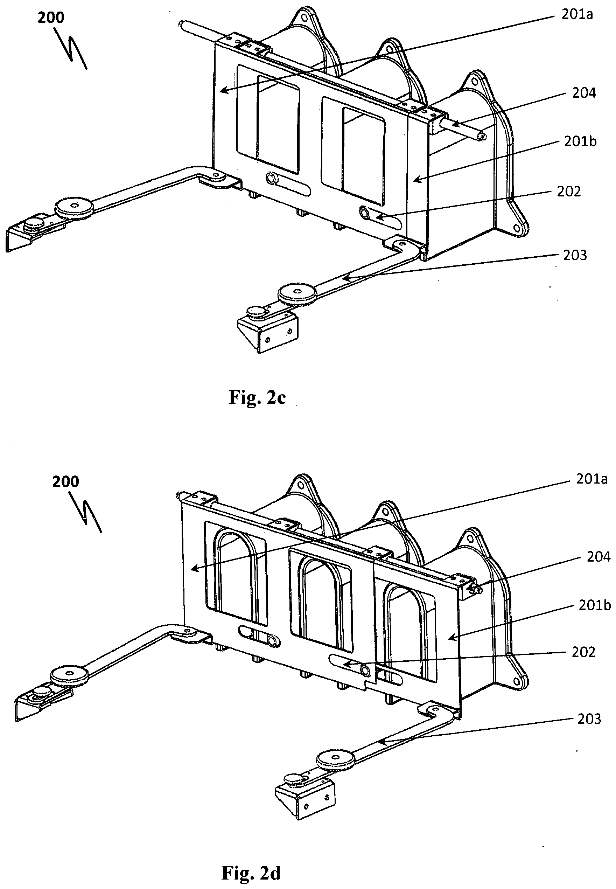

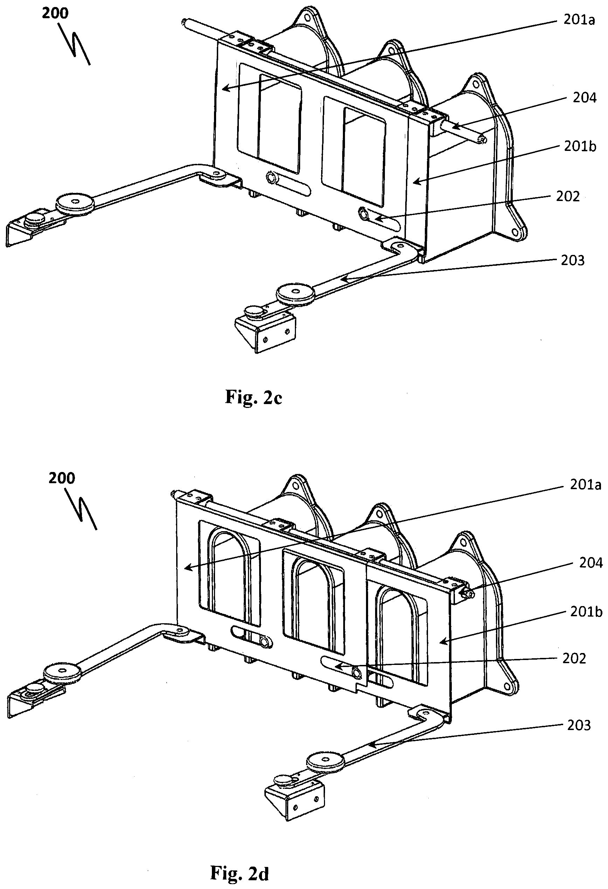

The invention can be better understood with reference to non-exhaustive exemplary embodiments as referenced in Figs. 2a through 2d. Figs. 2a and 2b shows the shutter arrangement (200) of the switchgear in close and open condition respectively, in accordance with one exemplary and non-exhaustive embodiment. Also, the Figs. 2c and 2b shows the shutter arrangement (200) of the switchgear in close and open condition respectively, in accordance with one other exemplary and non-exhaustive embodiment. These two non-exhaustive exemplary embodiments primarily differ in the shape or pattern of the shutters.

The shutter arrangement 200 of the switchgear has a top shutter (201a) provided over the bottom shutter (201b). The top shutter (201a) and the bottom shutter (201b) are movable in lateral direction, with the top shutter (201a) movable over the bottom shutter (201b).

The top shutter (201a) and the bottom shutter (201b) have clots or cut portions or the like, and arranged or aligned in a manner that would render them to open and close the opening or space that appears between the stationary disconnect contacts and the movable disconnect contacts, during the opening and closing operation of the shutters.

The top shutter (201a) and bottom shutter (201b) are movable along its corresponding slots (202) and guided by a guide rod (204). The top shutter (201a) and the bottom shutter (201b) are operated by the shutter operating mechanism comprising operating levers (203). The operating lever (203) is connected to the respective top shutter (201a) and bottom shutter (201b) at its one end and to the circuit breaker at its other end, so as to exhibit movement of the shutters in accordance with the movement of the circuit breaker and of the movable disconnect contacts thereof.

During the opening of the shutters rendering the shutters to achieve open condition, the movement of the circuit breaker into the cubicle of the switchgear causes the operating lever (203) to move the top shutter (201a) and bottom shutter (201b) in opposite direction in lateral direction away from each other thereby creating an opening (205) through which the movable disconnect contacts and the stationary disconnect contacts engages.

During the closing of the shutters rendering the shutters to achieve close condition, the movement of the circuit breaker out of the cubicle of the switchgear causes the operating lever (203) to move the top shutter (201a) and bottom shutter (201b) in opposite direction in lateral direction towards each other thereby creating closing the opening (205). By this the shutters form the physical barrier between the movable disconnect contacts and the stationary disconnect contacts when they are disengaging or disengaged.

The movement of the shutters are guided by a shutter guide (204) and enabled through its corresponding slots (202). Also, there are provided padlocks and interlocks that lock the shutters in the open and / or close condition, and may be operable independently. This reduces or prevents accidental engagement and / or disengagement of the stationary disconnect contacts and its corresponding movable disconnect contacts, from the respective disengaged and / or engaged condition thereof.

Besides the above, the shutter arrangement of the switchgear may have tension and / or compression springs disposed therein in cooperation with the top shutter (201a) and / or the bottom shutter (201b). These springs enables the shutters to either open or close in coordinated or assisted manner as against the counter operation of closing or opening of the shutters, respectively.

Also, the shutters have edges that conform to certain profiles like flat, curl, hemmed or the like. These profiles are provided to offer smooth finish to the shutter and of its edge thereof, also increasing the dielectric performance of the switchgear. Besides this, the shutter may have a layer of epoxy coated thereupon. Such epoxy coating also caters towards increasing dielectric performance of the switchgear.

Only certain features of the invention have been specifically illustrated and described herein, and many modifications and changes will occur to those skilled in the art. The invention is not restricted by the preferred embodiment described herein in the description. It is to be noted that the invention is explained by way of exemplary embodiment and is neither exhaustive nor limiting. Certain aspects of the invention that not been elaborated herein in the description are well understood by one skilled in the art. Also, the terms relating to singular form used herein in the description also include its plurality and vice versa, wherever applicable. Any relevant modification or variation, which is not described specifically in the specification are in fact to be construed of being well within the scope of the invention. The appended claims are intended to cover all such modifications and changes which fall within the spirit of the invention.
Thus, it will be appreciated by those skilled in the art that the present invention can be embodied in other specific forms without departing from the spirit or essential characteristics thereof. The presently disclosed embodiments are therefore considered in all respects to be illustrative and not restricted. The scope of the invention is indicated by the appended claims rather than the foregoing description and all changes that come within the meaning and range and equivalence thereof are intended to be embraced therein.

## Claims

1. A switchgear comprising:
at least one group of stationary contacts located within said switchgear;
at least one group of movable contacts located on a withdrawable circuit breaker of said switchgear; a shutter arrangement arranged to provide a physical barrier between said at least one group of stationary contacts and the corresponding at least one group of movable contacts, wherein said shutter arrangement comprises
- a bottom shutter (201b) having a first open portion;
- a top shutter (201a) provided over the bottom shutter and having a second open portion, wherein the top shutter (201a) and the bottom shutter (201b) are movable relative to one another in a lateral direction along corresponding slots (202) between a closed position and an open position, with the top shutter (201a) movable over the bottom shutter (201b);
- a shutter operating mechanism comprising an operating lever and an operating link connected thereto with the at least one of the top shutter (201a) and the bottom shutter (201b), the shutter operating mechanism adapted to operate the shutter arrangement upon movement of the withdrawable circuit breaker;
- a shutter guide (204) adapted to guide movement of the shutters; and
- one or more compression springs adapted to cooperate with the top shutter (201a) and/or the bottom shutter (201b) such that the shutters (201a, 201b) close in accordance with the corresponding movement of the at least one operating lever or the at least one operating link, **characterised by** that said shutters have corners and / or edges that has a profile, wherein the said profile preferably includes one or more profiles such as flat, curl, hemmed or the like, wherein the said profile is provided to offer smooth finish to the said shutters and of its edge thereof and to increase the dielectric performance of the said switchgear.

2. The switchgear as claimed in claim 1, wherein the top shutter (201a) and/or the bottom shutter (201b) are located in a plane between said at least one group of stationary contacts and the corresponding at least one group of movable contacts.

3. The switchgear as claimed in claim 1, wherein the said switchgear comprises two groups of stationary contacts and two groups of movable contacts correspondingly.

4. The switchgear as claimed in claims 1 or 2, wherein the said top shutter (201a) and the said bottom shutter (201b) are movable in the same or opposite direction.

5. The switchgear as claimed in claim 1, wherein the said two shutters (201a, 201b) are respectively movable one over the other in opposite direction.

6. The switchgear as claimed in claim 1, wherein the said shutter arrangement further comprising at least one further spring for opening the said at least one shutter in accordance with the corresponding movement of the operating levers or links and of the opening of the shutters thereof, wherein the said at least one spring preferably includes compression spring or tension spring or both

7. The switchgear as claimed in claim 1, wherein the said shutter arrangement further comprising at least one padlock and / or at least one interlock provided for locking the shutter in opened or closed condition or both.

8. The switchgear as claimed in claim 7, wherein the said at least one padlock and / or at least one interlock are adapted to reduce or prevent accidental engagement and / or disengagement of the said at least one group of stationary contacts and its corresponding said at least one group of movable contacts, from the respective disengaged and / or engaged condition thereof, wherein the said at least one padlock and said at least one interlock are preferably adapted to be operated independently.

9. The switchgear as claimed in claim 1, wherein the said at least one shutter has a layer of epoxy provided thereupon.

10. The switchgear as claimed in any one of the preceding claims, wherein the said shutter operating mechanism is connected to the said circuit breaker, the said circuit breaker is movable into and out of a cubicle of the switchgear.

11. The switchgear as claimed in any one of the preceding claims, wherein the said top shutter (201a) or bottom shutter (201b) and the corresponding said at least one group of stationary contacts and the said at least one group of movable contacts are located in corresponding relation to each other to allow engagement or disengagement of the said at least one group of stationary contacts and the corresponding said at least one group of disconnect contacts during and / or in accordance with the opening or closing of the said top shutter (201a) or bottom shutter (201b) and of the respective movement of the said circuit breaker into or out of the said cubicle of the said switchgear thereof.

12. A method for operating the shutter arrangement of a switchgear as claimed in any one of the preceding claims, wherein the method comprising the steps of:
moving the circuit breaker in and out of a cubicle of the said switchgear;
operating the shutter operating mechanism of the said shutter arrangement in accordance with corresponding movement of the said circuit breaker;
operating at least one shutter of the said switchgear to open or close by its corresponding and / or relative movement at an instance, by operating the said shutter operating mechanism during the engagement or disengagement of at least one group of stationary disconnect contacts and corresponding at least one group of movable disconnect contacts of the said switchgear, in accordance with the respective movement of the said circuit breaker into or out of the said cubicle of the said switchgear thereof.

## Patentansprüche

1. Schaltgerät, umfassend:
mindestens eine Gruppe von stationären Kontakten, die innerhalb des Schaltgeräts angeordnet sind;
mindestens eine Gruppe beweglicher Kontakte, die auf einem entnehmbaren Leitungsschutzschalter des Schaltgeräts angeordnet sind; eine Verschlussanordnung, die angeordnet ist, um eine physikalische Barriere zwischen der mindestens einen Gruppe von stationären Kontakten und der entsprechenden mindestens einen Gruppe von beweglichen Kontakten bereitzustellen, wobei die Verschlussanordnung Folgendes umfasst:
- einen unteren Blendenverschluss (201b) mit einem ersten offenen Abschnitt;
- einen oberen Blendenverschluss (201a), der über dem unteren Blendenverschluss bereitgestellt ist und einen zweiten offenen Abschnitt aufweist, wobei der obere Blendenverschluss (201a) und der untere Blendenverschluss (201b) relativ zueinander in einer seitlichen Richtung entlang entsprechender Schlitze (202) zwischen einer geschlossene Position und einer offenen Position bewegbar sind, wobei der obere Blendenverschluss (201a) über den unteren Blendenverschluss (201b) bewegbar ist;
- einen Verschlussbetätigungsmechanismus, der einen Betätigungshebel und ein damit verbundenes Betätigungsglied mit dem mindestens einen des oberen Blendenverschlusses (201a) und des unteren Blendenverschlusses (201b) umfasst, wobei der Verschlussbetätigungsmechanismus die Verschlussanordnung bei einer Bewegung des entnehmbaren Leitungsschutzschalter betätigen kann;
- eine Blendenverschlussführung (204), die ausgelegt ist, eine Bewegung der Blendenverschlüsse zu führen; und
- eine oder mehrere Druckfedern, die ausgelegt sind, mit dem oberen Blendenverschluss (201a) und/oder dem unteren Blendenverschluss (201b) derart zusammenwirken, dass sich die Blendenverschlüsse (201a, 201b) entsprechend der entsprechenden Bewegung des mindestens einen Betätigungshebels oder des mindestens einen Betätigungsglieds schließen,
**dadurch gekennzeichnet, dass** die Blendenverschlüsse Ecken und/oder Kanten aufweisen, die ein Profil aufweisen, wobei das Profil vorzugsweise ein oder mehrere Profile, wie beispielsweise flach, gewellt, gesäumt oder dergleichen, einschließt,
wobei das Profil bereitgestellt wird, um den Blendenverschlüssen und deren Rand eine glatte Oberfläche zu verleihen und die dielektrische Leistung des Schaltgeräts zu erhöhen.

2. Schaltgerät nach Anspruch 1, wobei der obere Blendenverschluss (201a) und/oder der untere Blendenverschluss (201b) in einer Ebene zwischen der mindestens einen Gruppe stationärer Kontakte und der entsprechenden mindestens einen Gruppe beweglicher Kontakte angeordnet sind.

3. Schaltgerät nach Anspruch 1, wobei das Schaltgerät zwei Gruppen von stationären Kontakten und zwei Gruppen von entsprechenden beweglichen Kontakten umfasst.

4. Schaltgerät nach Anspruch 1 oder 2, wobei der obere Blendenverschluss (201a) und der untere Blendenverschluss (201b) in der gleichen oder entgegengesetzten Richtung bewegbar sind.

5. Schaltgerät nach Anspruch 1, wobei die zwei Blendenverschlüsse (201a, 201b) jeweils in entgegengesetzter Richtung übereinander bewegbar sind.

6. Schaltgerät nach Anspruch 1, wobei die Verschlussanordnung ferner mindestens eine weitere Feder zum Öffnen des mindestens einen Blendenverschlusses gemäß der entsprechenden Bewegung der Betätigungshebel oder - glieder und der Öffnung der Blendenverschlüsse derselben aufweist, wobei die mindestens eine Feder vorzugsweise eine Druckfeder oder eine Zugfeder oder beides einschließt.

7. Schaltgerät nach Anspruch 1, wobei die Verschlussanordnung ferner mindestens ein Vorhängeschloss und/oder mindestens eine Verriegelung umfasst, die zum Verriegeln des Blendenverschlusses im geöffneten oder geschlossenen Zustand oder in beiden bereitgestellt wird.

8. Schaltgerät nach Anspruch 7, wobei das mindestens eine Vorhängeschloss und/oder die mindestens eine Verriegelung ausgelegt sind, ein unbeabsichtigtes Eingreifen und/oder Lösen der mindestens einen Gruppe von stationären Kontakten und deren entsprechenden mindestens einen Gruppe von beweglichen Kontakten aus dem jeweiligen gelösten und/oder eingegriffenen Zustand zu verringern oder zu verhindern, wobei das mindestens eine Vorhängeschloss und die mindestens eine Verriegelung vorzugsweise ausgelegt sind, unabhängig voneinander betrieben zu werden.

9. Schaltgerät nach Anspruch 1, wobei der mindestens eine Blendenverschluss eine darauf bereitgestellte Schicht aus Epoxid aufweist.

10. Schaltgerät nach einem der vorhergehenden Ansprüche, wobei der Verschlussbetätigungsmechanismus mit dem Leitungsschutzschalter verbunden ist, wobei der Leitungsschutzschalter in eine Zelle des Schaltgeräts hinein und aus dieser heraus bewegbar ist.

11. Schaltgerät nach einem der vorhergehenden Ansprüche, wobei der obere Blendenverschluss (201a) oder der untere Blendenverschluss (201b) und die entsprechende mindestens eine Gruppe von stationären Kontakten und die mindestens eine Gruppe von beweglichen Kontakten darin in einer entsprechenden Beziehung zueinander angeordnet sind, um ein Eingreifen oder Lösen der mindestens einen Gruppe von stationären Kontakten und der entsprechenden mindestens einen Gruppe von Trennkontakten während und/oder gemäß dem Öffnen oder Schließen des oberen Blendenverschlusses (201a) oder des unteren Blendenverschlusses (201b) und der jeweiligen Bewegung des Leitungsschutzschalters in die Zelle des Schaltgeräts hinein oder aus dieser heraus zu ermöglichen.

12. Verfahren zum Betreiben der Verschlussanordnung eines Schaltgeräts nach einem der vorhergehenden Ansprüche, wobei das Verfahren die folgenden Schritte umfasst:
Bewegen des Leitungsschutzschalters in eine Zelle des Schaltgeräts hinein und aus dieser heraus;
Betätigen des Verschlussbetätigungsmechanismus der Verschlussanordnung gemäß einer entsprechenden Bewegung des Leitungsschutzschalters;
Betätigen des wenigstens eines Blendenverschlusses des Schaltgeräts zum Öffnen oder Schließen durch seine entsprechende und/oder relative Bewegung zu einem Zeitpunkt durch Betätigen des Verschlussbetätigungsmechanismus während des Eingreifens oder Lösens von mindestens einer Gruppe von stationären Trennkontakten und mindestens einer entsprechenden Gruppe von beweglichen Trennkontakten des Schaltgeräts gemäß der jeweiligen Bewegung des Leitungsschutzschalters in die Zelle des Schaltgeräts hinein oder aus dieser heraus.

## Revendications

1. Appareillage de commutation comprenant :
au moins un groupe de contacts fixes situés à l'intérieur dudit appareillage de commutation ;
au moins un groupe de contacts mobiles situés sur un coupe-circuit extractible dudit appareillage de commutation ; un dispositif de volet disposé pour fournir une barrière physique entre ledit au moins un groupe de contacts fixes et ledit au moins un groupe de contacts mobiles correspondant, où ledit dispositif de volet comprend
- un volet inférieur (201b) ayant une première partie ouverte ;
- un volet supérieur (201a) fourni par-dessus le volet inférieur et ayant une seconde partie ouverte, le volet supérieur (201a) et le volet inférieur (201b) pouvant être déplacés l'un par rapport à l'autre dans une direction latérale le long de fentes correspondantes (202) entre une position fermée et une position ouverte, avec le volet supérieur (201a) mobile par-dessus le volet inférieur (201b) ;
- un mécanisme d'actionnement de volet comprenant un levier d'actionnement et une liaison d'actionnement reliée à celui-ci avec ledit au moins un parmi le volet supérieur (201a) et le volet inférieur (201b), le mécanisme d'actionnement de volet étant conçu pour actionner le dispositif de volet lors d'un mouvement du coupe-circuit extractible ;
- un guide de volet (204) conçu pour guider le mouvement des volets ; et
- un ou plusieurs ressorts de compression conçus pour coopérer avec le volet supérieur (201a) et/ou le volet inférieur (201b) de telle sorte que les volets (201a, 201b) se ferment conformément au mouvement correspondant dudit au moins un levier d'actionnement ou de ladite au moins une liaison d'actionnement,
**caractérisé en ce que** lesdits volets possèdent des coins et/ou des bords qui ont un profil, où ledit profil inclut de préférence un ou plusieurs profils tels que plat, incurvé, à bord roulotté ou similaire,
ledit profil étant fourni pour offrir une finition lisse auxdits volets et du bord de ceux-ci et pour augmenter la performance diélectrique dudit appareillage de commutation.

2. Appareillage de commutation selon la revendication 1, dans lequel le volet supérieur (201a) et/ou le volet inférieur (201b) sont situés dans un plan entre ledit au moins un groupe de contacts fixes et ledit au moins un groupe de contacts mobiles correspondant.

3. Appareillage de commutation selon la revendication 1, où ledit appareillage de commutation comprend deux groupes de contacts fixes et deux groupes de contacts mobiles de manière correspondante.

4. Appareillage de commutation selon les revendications 1 ou 2, dans lequel ledit volet supérieur (201a) et ledit volet inférieur (201b) peuvent être déplacés dans la même direction ou dans une direction opposée.

5. Appareillage de commutation selon la revendication 1, dans lequel lesdits deux volets (201a, 201b) peuvent respectivement être déplacés l'un au-dessus de l'autre dans une direction opposée.

6. Appareillage de commutation selon la revendication 1, dans lequel ledit dispositif de volet comprend en outre au moins un autre ressort pour ouvrir ledit au moins un volet conformément au mouvement correspondant des leviers ou liaisons d'actionnement et de l'ouverture des volets de celui-ci, où ledit au moins un ressort inclut de préférence un ressort de compression ou un ressort de tension ou l'un et l'autre

7. Appareillage de commutation selon la revendication 1, dans lequel ledit dispositif de volet comprend en outre au moins un cadenas et/ou au moins un dispositif de verrouillage fourni pour verrouiller le volet dans une condition ouverte ou fermée ou l'une et l'autre.

8. Appareillage de commutation selon la revendication 7, dans lequel lesdits au moins un cadenas et/ou au moins un dispositif de verrouillage sont conçus pour réduire ou prévenir un enclenchement et/ou une libération accidentels dudit au moins un groupe de contacts fixes et de son au moins un groupe précité de contacts mobiles correspondant, à partir de la condition libérée et/ou enclenchée respective de celui-ci, ledit au moins un cadenas et ledit au moins un dispositif de verrouillage étant de préférence conçus pour être actionnés indépendamment.

9. Appareillage de commutation selon la revendication 1, dans lequel ledit au moins un volet comporte une couche d'époxy fournie sur celui-ci.

10. Appareillage de commutation selon l'une quelconque des revendications précédentes, dans lequel ledit mécanisme d'actionnement de volet est relié audit coupe-circuit, ledit coupe-circuit peut être déplacé vers l'intérieur et l'extérieur d'un compartiment de l'appareillage de commutation.

11. Appareillage de commutation selon l'une quelconque des revendications précédentes, dans lequel ledit volet supérieur (201a) ou volet inférieur (201b) et ledit au moins un groupe de contacts fixes et ledit au moins un groupe de contacts mobiles correspondants sont situés en relation correspondante l'un par rapport à l'autre pour permettre l'enclenchement ou la libération dudit au moins un groupe de contacts fixes et dudit au moins un groupe de contacts de déconnexion correspondant pendant et/ou conformément à l'ouverture ou la fermeture dudit volet supérieur (201a) ou volet inférieur (201b) et le mouvement respectif dudit coupe-circuit vers l'intérieur ou l'extérieur dudit compartiment dudit appareillage de commutation de celui-ci.

12. Procédé d'actionnement du dispositif de volet d'un appareillage de commutation selon l'une quelconque des revendications précédentes, où le procédé comprend les étapes consistant à :
déplacer le coupe-circuit vers l'intérieur et l'extérieur d'un compartiment dudit appareillage de commutation ;
actionner le mécanisme d'actionnement de volet dudit dispositif de volet conformément au mouvement correspondant dudit coupe-circuit ;
actionner au moins un volet dudit appareillage de commutation pour l'ouvrir ou le fermer par son mouvement correspondant et/ou relatif à un moment, en actionnant ledit mécanisme d'actionnement de volet pendant l'enclenchement ou la libération d'au moins un groupe de contacts de déconnexion fixes et au moins un groupe correspondant de contacts de déconnexion mobiles dudit appareillage de commutation, conformément au mouvement respectif dudit coupe-circuit vers l'intérieur ou l'extérieur dudit compartiment dudit appareillage de commutation de celui-ci.
